# EUROPEAN PATENT APPLICATION

(11) **EP 4 589 266 A1**
(43) Date of publication of application: **23.07.2025**
(21) Application number: 23865451.1
(22) Date of filing: 11.09.2023
(51) Int. Cl.: G01F 23/263

(54) **ELECTROSTATIC CAPACITANCE DETECTION TAG AND CONTAINER WITH TAG**

(30) Priority: 12.09.2022 JP 2022144592
(71) Applicant: Toppan Holdings Inc., Tokyo 110-0016 (JP)
(72) Inventor: HIGUCHI, Noriaki, Tokyo 110-0016 (JP); YAMAOKA, Keinosuke, Tokyo 110-0016 (JP); KOBAYASHI, Moyuru, Tokyo 110-0016 (JP); TAKANO, Hiroki, Tokyo 110-0016 (JP); NAKABAYASHI, Takamitsu, Tokyo 110-0016 (JP)
(74) Representative: Hoffmann Eitle
(86) International application number: PCT/JP2023/032988
(87) International publication number: WO 2024/058097

(57) **Abstract**

A capacitance detection tag that is provided to a container including a containing part that contains contents whose upper surface level changes in a height direction includes: electrodes including a first electrode and a second electrode located so as not to overlap with the first electrode; an antenna part that enables contactless communication with an external device; and an IC chip that is electrically connected to the electrodes and the antenna part and measures a capacitance formed between the first and second electrodes. The IC chip communicates with the external device without contact via the antenna part and transmits the capacitance measured by the IC chip to the external device.

## Description

### [Technical Field]

The present invention relates to a capacitance detection tag and a tagged container.

The present application claims the benefit of priority from Japanese Patent Application No. 2022-144592 filed on September 12, 2022, the contents of which are incorporated herein by reference.

### [Background Art]

Examples of conventional detectors for detecting the level of water (contents) contained in a container include float-type devices that detect the water level using a float floating on the liquid surface (see PTL 1). Further, a capacitive-type level detector is known that detects changes in capacitance between a plurality of detection electrodes (see PTL 2).

Meanwhile, in the case of, for example, containers used to store everyday contents such as drinking water or household detergents, the container or label may be formed with scale markings in advance as shown in PTL 3 to meet the need to check the remaining amount.

### [Citation List]

### [Patent Literature]

[PTL 1] JP 2002-83364 A
[PTL 2] JP 2020-67366 A
[PTL 3] JP 2011-189955 A

### [Summary of the Invention]

### [Technical Problem]

However, the detectors described in PTL 1 and 2 require an external power source, and therefore cannot detect the contents of containers at locations where there is no external power supply nearby. In addition, the detection units of the detection devices described in PTL 1 and 2 are in contact with the contents, which prevents them from being used for drinking water or the like from a hygienic standpoint. Most of these water level detectors are large and specialized, making them difficult to install and use in a variety of containers.

The container described in PTL 3 may not be preferred as a container for cosmetics or the like, which appeals to users through its appearance. Containers with scale markings must be configured so that the container body or a label wrapped around the body is transparent or semitransparent, allowing the remaining amount of contents to be compared with the scale markings. Another method for checking the amount of water remaining in a container is to check the weight rather than the water level, but in that case, one needs to always carry around a weighing scale, making it difficult to check the volume outside of the home.

The present invention has been made in consideration of the above circumstances, and an object thereof is to provide a capacitance detection tag that can be easily attached to a container and is capable of detecting the volume of the contents inside the container, and a tagged container having the capacitance detection tag.

### [Solution to Problem]

In order to solve the above problems, the present invention proposes the following solution.

A capacitance detection tag according to a first aspect of the present invention is provided to a container including a containing part that contains contents whose upper surface level changes in a height direction, and includes: electrodes including a first electrode and a second electrode located so as not to overlap with the first electrode; an antenna part that enables contactless communication with an external device; and an IC chip that is electrically connected to the electrodes and the antenna part and measures a capacitance formed between the first and second electrodes, in which the IC chip communicates with the external device without contact via the antenna part and transmits the capacitance measured by the IC chip to the external device.

### [Advantageous Effects of the Invention]

The capacitance detection tag and tagged container of the present invention can provide a capacitance detection tag that can be easily attached to a container and can detect the capacitance of the contents in the container, and a tagged container provided with the capacitance detection tag.

### [Brief Description of the Drawings]

Fig. 1 is a perspective view illustrating a tagged container according to the first embodiment of the present invention.
Fig. 2 is a front view illustrating the configuration of an IC tag sticker of the tagged container of Fig. 1.
Fig. 3A is a diagram showing the tagged container in an initial state.
Fig. 3B is a diagram showing the tagged container in a reduced state where the amount of water in the containing part has decreased from the initial state.
Fig. 4 is a graph showing the correlation between the capacitance of the electrodes of the tagged container of Fig. 1 and the water level.
Fig. 5 is a diagram showing the configuration of a capacitance detection tag of a tagged container according to the second embodiment of the present invention.
Fig. 6 is a diagram showing the tagged container opened by removing a cap of a plastic bottle.
Fig. 7 is a graph showing the correlation between the capacitance of the electrodes of the tagged container of Fig. 5 and the water level.
Fig. 8 is a diagram showing the configuration of a capacitance detection tag 1B of a tagged container 10B according to the third embodiment of the present invention.
Fig. 9 is a graph showing the correlation between the capacitance of the electrodes of the tagged container of Fig. 8 and the water level.
Fig. 10 is a diagram showing a modification of the tagged container of Fig. 1.
Fig. 11 is a diagram showing a modification of the tagged container of Fig. 8.
Fig. 12 is a diagram showing the configuration of a capacitance detection system according to the fourth embodiment.
Fig. 13 is a diagram for explaining a specific display example displayed on an external device.
Fig. 14 is a diagram for explaining a specific display example displayed on an external device.

### [Description of the Embodiments]

### (First Embodiment)

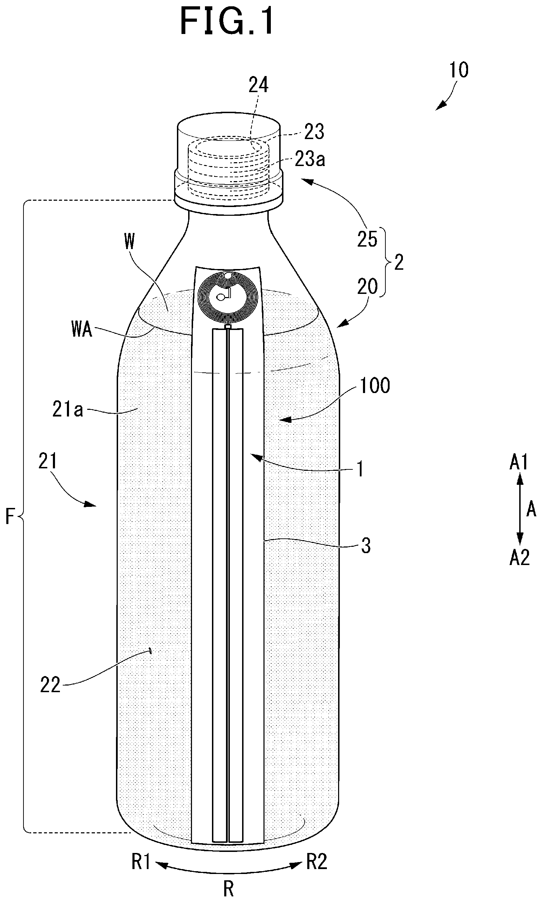

With reference to Figs. 1 to 4, a first embodiment of the present invention will be described. In the embodiments and modifications described below, the same reference sign is used to designate corresponding components, and descriptions of overlapping parts may be omitted. Further, in the following description, expressions indicating relative or absolute arrangements, such as "parallel", "orthogonal", "center", and "coaxial", not only indicate such arrangements strictly, but also indicate a state in which there is a relative displacement corresponding to a tolerance or an angle or distance that does not affect the function.

Fig. 1 is a perspective view illustrating a tagged container 10 according to the first embodiment of the present invention.

In this embodiment, the tagged container 10 is a plastic beverage bottle 2 that is placed on the ground and extends vertically. However, the tagged container 10 may be placed sideways during storage, transportation, or the like.

In the following description of the tagged container 10, the direction in which the plastic bottle 2 extends is referred to as a vertical direction A, with the upper side being referred to as an upper side A1 and the lower side, which is the ground side, being referred to as a lower side A2. In this embodiment, the vertical direction A is the vertical direction relative to gravity.

The tagged container 10 includes the plastic bottle 2 and an IC tag sticker 100 including a capacitance detection tag 1.

### [Plastic Bottle (Container) 2]

The plastic bottle (container) 2 can be a commonly known plastic bottle of a portable size and shape. The plastic bottle 2 includes a plastic bottle body 20 and a cap (sealing part) 25.

### [Plastic Bottle Body (Container Body) 20]

The plastic bottle body (container body) 20 includes a main part 21 and a spout part 23.

The main part 21 extends in the vertical direction A. The main part 21 has a containing part 22 inside it. The containing part is a space capable of containing, for example, water W (contents).

An IC tag sticker 100 (described later) is attached to an outer side surface (outer surface) 21a of the main part 21 in a circumferential direction R. Note that a label sheet for displaying information such as the product name, product details, or an image may be further attached to the main part 21 so as to cover the outer side surface 21a, or the outer side surface 21a may be printed with such information. Although the main part 21 is transparent in this embodiment, it is not particularly limited thereto, and may be opaque.

The spout part 23 is an annular member connected to the upper side A1 of the main part 21. A male-threaded part 23a is formed on the outer side surface of the spout part, and screws onto a female-threaded part (not shown) of a cap 25 described below.

The spout part 23 is formed with an opening 24. The opening 24 is a port through which the water W can be introduced into and removed from the containing part 22.

When the user removes the water W from or pours water W into the containing part 22 through the opening 24, a water level WA (the height of the upper surface (water surface) of the water W) of the water W contained in the containing part 22 changes. Since the level of the water W changes vertically in the containing part 22 due to gravity, the height direction of the water level WA is the vertical direction relative to gravity. That is, the height direction is the same as the vertical direction A in this embodiment.

As shown in Fig. 1, the area in the containing part 22 that stores the water W in the vertical direction A is defined as a containing area. The containing area is also referred to as an area in which the water level WA of the water W changes from the top end of the main part 21 where the water level WA of the water W is highest, to the bottom surface of the main part 21 where the water level WA is lowest. The positions where the water level WA is highest and lowest in the containing part 22 are not particularly limited, and may be set as appropriate in the containing part 22 to define the containing area.

### [Cap (Sealing Part) 25]

The cap (sealing part) 25 is removable from the plastic bottle body (container body) 20 and serves to open and close the opening 24. The cap 25 has a female-threaded part (not shown) on its inner surface that screws onto the male-threaded part of the spout part so that the opening 24 can be opened and closed.

The plastic bottle 2 is formed, for example, by connecting the main part 21 of the plastic bottle body 20, the spout part 23, and the cap 25 in this order from the lower side A2 to the upper side A1 along the vertical direction A.

[IC tag sticker 100] As shown in Fig. 1, the IC tag sticker 100 is attached to the outer side surface 21a of the main part 21 with an adhesive or the like with its longitudinal direction aligned with the vertical direction A.

The IC tag sticker 100 includes a substrate 3 and the capacitance detection tag 1.

### [Substrate 3]

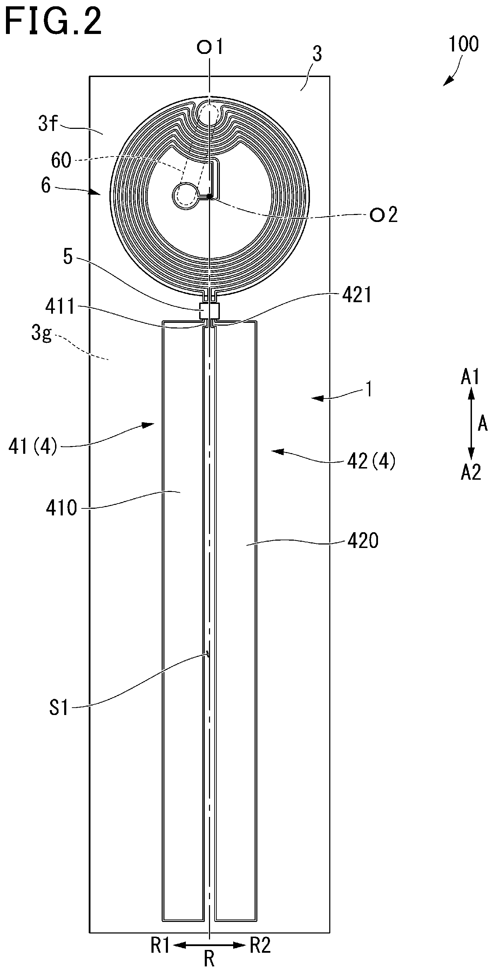

Fig. 2 is a front view illustrating the IC tag sticker 100 of the tagged container 10.

The substrate 3 is an insulating sheet-like substrate. As shown in Fig. 2, a back surface 3g of the substrate 3 is attached to the outer side surface 21a of the main part 21 of the plastic bottle body 20 of the plastic bottle 2. The IC tag sticker 100 is provided to the plastic bottle 2 in this configuration.

The substrate 3 on the outer side surface 21a has a rectangular shape with opposing long sides and opposing short sides. The substrate 3 is preferably flexible so that it can be attached along the outer side surface 21a that is curved in the circumferential direction R of the main part 21. As shown in Fig. 1, in this embodiment, the substrate 3 is curved along the circumferential direction R of the outer side surface 21a of the main part 21. However, it is not particularly limited thereto, and may be formed along a tangent plane to a part of the outer side surface 21a of the main part 21.

In this embodiment, the substrate 3 is formed using, for example, a PET substrate. However, the material of the substrate 3 is not particularly limited, and may be, for example, glass epoxy or a paper substrate, or a composite substrate of a plurality of materials. When a paper substrate is used, the environmental impact can be reduced. The substrate 3 may be transparent or may be opaque.

The substrate 3 is attached to the plastic bottle 2 with an adhesive or the like. The adhesive may be provided on the back surface 3g that contacts the plastic bottle 2, or the substrate 3 may be attached by providing the plastic bottle 2 with an adhesive. Electrodes 4 of the capacitance detection tag 1, an IC chip 5, and an antenna part 6, which will be described later, are mounted to a front surface 3f of the substrate 3. The electrodes 4, the IC chip 5, and the antenna part 6 constitute a support of the capacitance detection tag 1. The substrate 3 is not an essential component.

### [Capacitance Detection Tag 1]

The capacitance detection tag 1 is provided on the plastic bottle 2. The capacitance detection tag 1 is a tag that performs contactless communication with a contactless external device, such as a smartphone or a reader/writer that supports UHF or NFC, to enable detection of the water level WA of the water W contained in the containing part 22 of the plastic bottle 2. The capacitance detection tag 1 includes the electrodes 4, the IC chip 5, and the antenna part 6.

### [Electrodes 4]

The electrodes 4 are provided on the front surface 3f of the substrate 3 as shown in Fig. 2. The electrodes 4 are a detection part that detects the water level WA of the water W contained in the containing part 22 of the plastic bottle 2. The electrodes 4 can be provided by, for example, laser cutting or punching a metal plate or metal foil, etching a metal foil or metal layer, or arranging metal wiring. The electrodes 4 includes a first electrode 41 and a second electrode 42.

### [First Electrode 41]

The first electrode 41 is provided on the front surface 3f of the substrate 3 and extends along the vertical direction A. The first electrode 41 has a rectangular shape extending along the vertical direction A and having opposing long sides and opposing short sides. As shown in Fig. 1, the first electrode 41 is placed in a detectable area F that faces the containing area across the outer side surface 21a of the plastic bottle 2. Note that at least a part of the first electrode 41 may be placed in the detectable area F. The first electrode 41 is provided on one side R1 in the circumferential direction R of a central axis O1 of the substrate 3 extending in the vertical direction A. The first electrode 41 includes a first water level detection part 410 and a first electrode connection part 411.

The first water level detection part 410 is a plate-like electrode that detects the water level WA of the water W contained in the containing part 22 of the plastic bottle 2. As shown in Fig. 2, the first water level detection part 410 extends in the vertical direction A and is formed in a rectangular shape. The size and shape of the first water level detection part 410 are not particularly limited.

The first electrode connection part 411 electrically connects the first water level detection part 410 and the IC chip 5. The first electrode connection part 411 is not an essential component, and may be omitted by directly connecting the first water level detection part 410 and the IC chip 5.

### [Second Electrode 42]

The second electrode 42 is provided on the front surface 3f of the substrate 3 and extends along the vertical direction A. The second electrode 42 has a rectangular shape extending along the vertical direction A and having opposing long sides and opposing short sides. The second electrode 42 is placed within the detectable area F in the vertical direction A as shown in Fig. 1. Note that at least a part of the second electrode 42 may be placed in the detectable area F. The second electrode 42 is provided on the other side R2 of the central axis O1 in the circumferential direction R. The second electrode 42 includes a second water level detection part 420 and a second electrode connection part 421.

The second water level detection part 420 is a plate-like electrode that detects the water level WA of the water W contained in the containing part 22 of the plastic bottle 2. As shown in Fig. 2, the second water level detection part 420 extends in the vertical direction A and is formed in a rectangular shape. The size and shape of the second water level detection part 420 are not particularly limited.

The second electrode connection part 421 electrically connects the second water level detection part 420 and the IC chip 5. The second electrode connection part 421 is not an essential component, and may be omitted by directly connecting the second water level detection part 420 and the IC chip 5.

The first and second electrodes 41 and 42 face each other in the circumferential direction R with the central axis O1 in between. A space S1 is formed between the first and second electrodes 41 and 42. The space S1 extends in the vertical direction A with a substantially uniform gap between them. That is, the first and second electrodes 41 and 42 are placed in the detectable region F with a substantially equal gap along the vertical direction A.

A high-frequency electromagnetic field generated by a transmitting/receiving circuit of a contactless external device (not shown) induces a high-frequency voltage in the antenna part 6 described below so that a voltage is applied to the electrodes 4, and capacitance is stored between the first and second electrodes 41 and 42. This capacitance changes with changes in the dielectric constant caused by changes in the water level WA of the water W.

### [IC Chip 5]

The IC chip 5 is provided on the front surface 3f of the substrate 3 as shown in Fig. 2. The IC chip 5 is provided on the upper side A1 of the first and second electrodes 41 and 42, and is connected to both the first and second electrodes 41 and 42. The IC chip 5 communicates with external devices via the antenna part 6 to realize a wireless communication function of the capacitance detection tag 1. Specifically, power is supplied to the IC chip 5 via the antenna part 6. The IC chip 5 can perform wireless communication, receive commands from external devices, and respond to the commands.

In this embodiment, the IC chip 5 has a function of receiving a command from an external device to measure the capacitance stored between the first and second electrodes 41 and 42. The IC chip 5 can also transmit the measured capacitance to an external device via wireless communication.

The IC chip 5 can also record the correlation between the measured capacitance and the water level WA of the water W to detect the water level WA. Specifically, since the space S1 between the first and second electrodes 41 and 42 extends with a substantially uniform gap between them, the water level WA of the water W is substantially directly proportional to the increase and decrease in capacitance. That is, the IC chip 5 can detect the water level WA of the water W contained in the containing part 22 based on the magnitude of the measured capacitance.

Note that the IC chip 5 may not necessarily need to store the correlation between the measured capacitance and the water level WA of the water W. In that case, the external device can store the correlation between the capacitance measured by the IC chip 5 and the water level WA of the water W in an application so that the water level WA of the water W can be detected according to the change in capacitance obtained from the IC chip 5 via wireless communication.

The IC chip 5 may also store information about the water W and identification information for the plastic bottle 2 to which the IC chip 5 is attached. In that case, the IC chip 5 can transmit information about the water W and identification information to an external device. Information may be added to or updated in the IC chip 5 by an external device.

### [Antenna Part 6]

The antenna part 6 is provided on the front surface 3f of the substrate 3 as shown in Fig. 2. The antenna part 6 is placed on the upper side A1 of the IC chip 5 and is a looped conductor connected to the IC chip 5. The antenna part 6 can be a conventionally known antenna, and is designed to have an antenna length and antenna wire width that can support the UHF band or the HF band, for example. In this embodiment, the antenna part 6 is formed in a spiral shape by winding two or more times in a circle around a central axis O2 in a plate thickness direction of the substrate 3 perpendicular to the circumferential direction R. Note that the position of the antenna part 6 is not particularly limited.

Also note that, although in this embodiment the base end near the central axis O2 of the antenna part 6 and the leading end at the last turn of the antenna part 6 each form a crimp connector or a through hole, and are connected by a bridging wiring 60 on the back surface 3g of the substrate 3, the present invention is not particularly limited thereto, and the base end and the leading end may be connected by providing a wiring circuit on the front surface 3f of the substrate 3 using jumper wiring.

The antenna part 6 enables contactless communication with a contactless external device such as a reader/writer or a mobile phone. The IC chip 5 that has communicated with an external device via the antenna part 6 can be supplied with power and receive commands from the external device, and respond to the commands.

### (Effects)

The effects of the tagged container 10 will now be described.

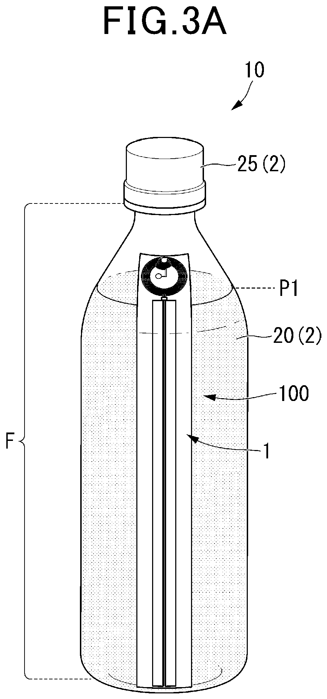

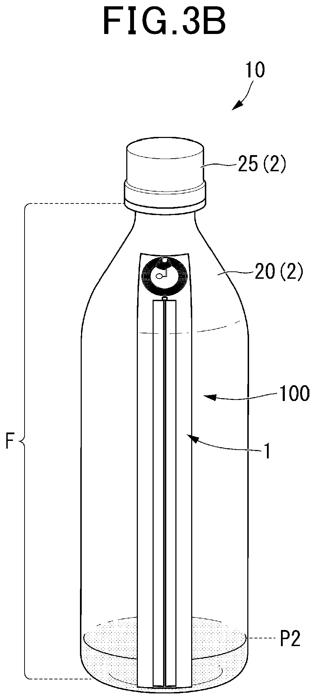

Fig. 3A is a diagram showing the tagged container 10 in an initial state. Fig. 3B is a diagram showing the tagged container 10 in a reduced state where the amount of water W in the containing part 22 has decreased from the initial state.

First, the tagged container 10 is formed by attaching the IC tag sticker 100 to the plastic bottle 2 with an adhesive or the like. As shown in the initial state of Fig. 3A, the containing part 22 of the plastic bottle 2 of the tagged container 10 contains water W. The water level WA of the water W at this time is assumed to be a first water level P1.

Next, the water W contained in the containing part 22 of the plastic bottle 2 is used by a user, and the state shifts from the initial state to the reduced state in which the amount of water W in the containing part 22 is reduced as shown in Fig. 3B. The water level WA of the water W at this time is assumed to be a second water level P2. The water level WA of the water W decreases (changes) from the first water level P1 to the second water level P2.

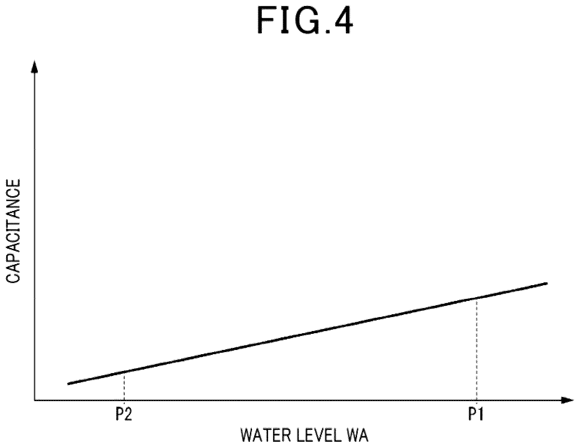

Fig. 4 is a graph showing the relationship between the water level WA of the water W in the containing area of the containing part 22 of the tagged container 1 and the capacitance of the detectable area F measured by the IC chip 5. In the graph of Fig. 4, the horizontal axis indicates the water level WA, and the vertical axis indicates the capacitance. The left end corresponds to the bottom surface of the main part 21 at which the water level WA is lowest, and the water level WA increases towards the upper side A1 in the vertical direction A as it moves to the right.

When the water level WA decreases (changes) from the first water level P1 to the second water level P2, the capacitance also decreases in proportion to the water level WA as shown in Fig. 4. The IC chip 5 can receive commands from an external device, measure the capacitance that changes in this way, and transmit the measured capacitance to the external device via wireless communication.

In this embodiment, the capacitance detection tag 1 has the electrodes 4, which are arranged in the detectable area F with a substantially uniform gap between them along the vertical direction A. In addition, the IC chip 5 can measure the electrostatic capacitance between the first and second electrodes 41 and 42 of the electrodes 4. This allows the IC chip 5 to detect the water level WA of the water W contained in the containing part 22 of the plastic bottle 2.

In addition, in this embodiment, the IC chip 5 of the capacitance detection tag 1 can measure the electrostatic capacitance between the first and second electrodes 41 and 42 of the electrodes 4. Therefore, the IC chip 5 can record the correlation between the measured capacitance and the water level WA of the water W to detect the water level WA.

In this embodiment, the IC tag sticker 100 having the capacitance detection tag 1 can be used without being brought into direct contact with the water W. This provides safe usage from a hygienic standpoint, and suitability in a variety of situations. In addition, since the container body, which is the plastic bottle 2, does not need to be transparent, it can be easily applied to various containers.

In this embodiment, the IC tag sticker 100 having the capacitance detection tag 1 can be used repeatedly. Thus, the cost can be saved.

In this embodiment, the IC tag sticker 100 having the capacitance detection tag 1 does not require a power source and can be easily attached to the plastic bottle 2. Therefore, the IC tag sticker 100 can be used regardless of the location.

Note that, although the IC tag sticker 100 having the capacitance detection tag 1 is attached to the plastic bottle 2 in this configuration, the capacitance detection tag 1 may be molded integrally with the plastic bottle body 20 by being embedded or the like during the manufacture of the plastic bottle 2.

The first embodiment of the present invention and modifications have been specifically described referring to the drawings. However, specific configurations of the present invention should not be limited to this embodiment but the present invention should include design changes and the like within the scope not departing from the spirit of the present invention. Further, the components described in the above embodiment and the embodiments and modifications described below can be appropriately combined with each other.

### (Second Embodiment)

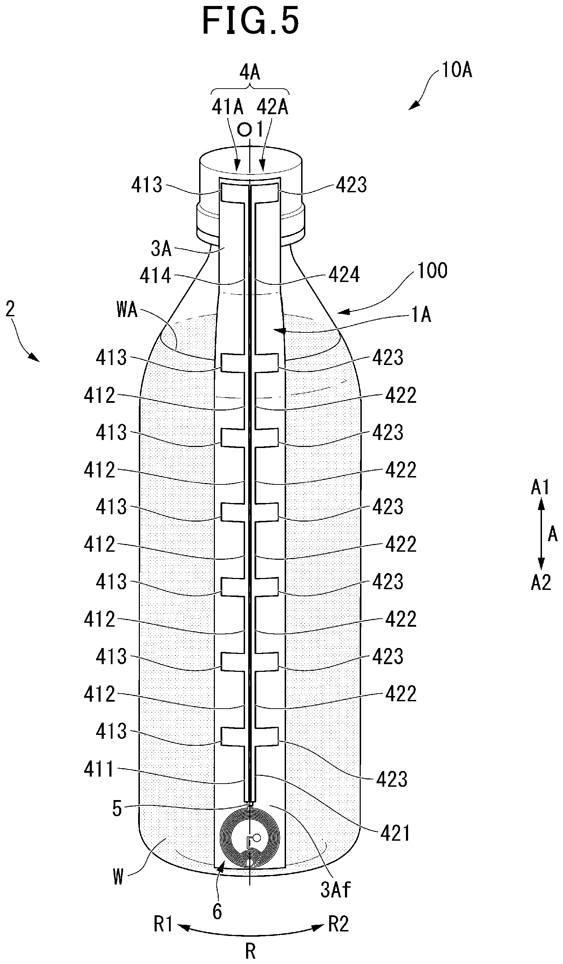

Next, a second embodiment of the present invention will be described with reference to Figs. 5 to 7. In the following description, components that are common to those described above are denoted by the same reference signs, and duplicated description thereof will be omitted. The following embodiments all have capacitance detection tags that are different from that of the first embodiment. Therefore, the following description will focus on the differences from the first embodiment.

Fig. 5 is a diagram showing the configuration of a capacitance detection tag 1A of a tagged container 10A according to the second embodiment of the present invention.

Compared to the first embodiment, the capacitance detection tag 1A is inverted in the vertical direction A with respect to the plastic bottle 2.

As shown in Fig. 5, a substrate 3Ais attached to the plastic bottle body 20 and cap (sealing part) 25 of the plastic bottle 2. The IC tag sticker 100A is provided to the plastic bottle 2 in this configuration.

As shown in Fig. 5, electrodes 4A are provided on a surface 3Af of the substrate 3A, and includes a first electrode 41A and a second electrode 42A.

The first electrode 41A is provided on the front surface 3Af of the substrate 3A and extends along the vertical direction A.
The first electrode 41A is provided on one side R1 in the circumferential direction R of the central axis O1 of the substrate 3A. The first electrode 41A includes a first electrode part 412, a second electrode part 413, a linking part 414, and a first electrode connection part 411.

The first electrode part 412 has an elongated rectangular shape extending along the vertical direction A and having opposing long sides and opposing short sides.

The second electrode part 413 has a larger contact area with the outer side surface 21a (the plastic bottle 2) in the detectable region F than the first electrode part 412. Specifically, the second electrode part 413 has a rectangular shape with a larger width than the first electrode part 412 in the circumferential direction R, and has opposing long sides extending in the circumferential direction R and opposing short sides extending in the vertical direction A. Therefore, when viewed from the front, the overlapping area of the second electrode part 413 with the detectable region F is larger than that of the first electrode part 412. A plurality of second electrode parts 413 are provided, seven in this embodiment. The second electrode parts 413 have substantially the same shape and size. Being substantially the same size means that they have the same dimension in the vertical direction A and the same dimension in the direction perpendicular to the vertical direction A.

The linking part 414 has an elongated rectangular shape extending along the vertical direction A and having opposing long sides and opposing short sides. The width of the linking part 414 in the circumferential direction R is substantially the same as that of the first electrode part 412. As shown in Fig. 5, the linking part 414 extends across the plastic bottle body 20 and the cap 25.

The combined strength of the substrate 3A and the linking part 414 bridging the plastic bottle body 20 and the cap 25 is weaker than the force a user is required to exert to remove the cap 25. Therefore, once the cap 25 is removed by the user, the parts of the linking part 414 and the substrate 3A that are attached to the cap 25 are torn off.

The first electrode part 412 connects the second electrode parts 413. The first electrode part 412 and the second electrode parts 413 are provided alternately in the vertical direction A. The linking part 414 connects the second electrode part 413 that is closest to the cap 25 among the plurality of second electrode parts 413 and provided on the plastic bottle body 20 of the plastic bottle 2 with the second electrode part 413 provided on the cap 25 and adjacent to the former second electrode part 413, as shown in Fig. 5.

Similarly to the first electrode 41A, the second electrode 42A is provided on the front surface 3Af of the substrate 3A and extends along the vertical direction A. The second electrode 42A is provided on the other side R2 in the circumferential direction R of the central axis O1 of the substrate 3A. Similarly to the first electrode 41A, the second electrode 42A includes a first electrode part 422, a second electrode part 423, a linking part 424, and a second electrode connection part 421.

The first and second electrodes 41A and 42A face each other in the circumferential direction R with the central axis O1 in between. A space S1 is formed between the first and second electrodes 41A and 42A that extends in the vertical direction A with a substantially uniform gap between them.

Note that although the second electrode part 413 and the second electrode part 423 provided on the cap 25 are not positioned in the detectable area F, when a voltage is applied, a small amount of capacitance is stored between the second electrode part 413 and the second electrode part 423. The IC chip 5 can measure this capacitance.

### (Effects)

The effects of the tagged container 10A will now be described.

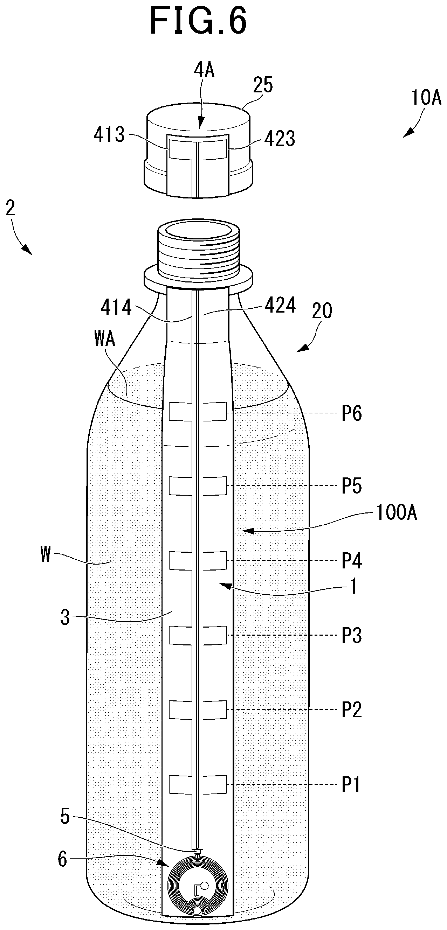

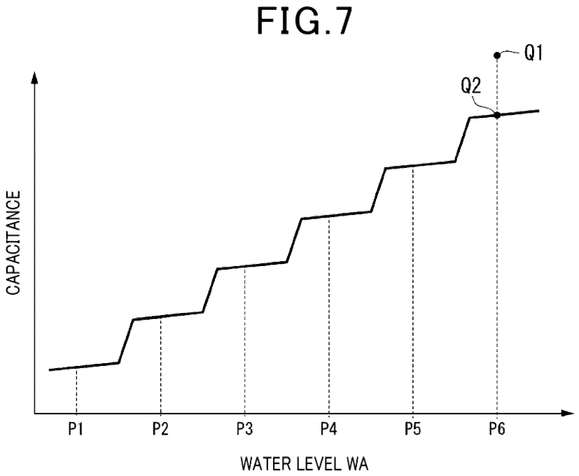

Fig. 6 is a diagram showing the tagged container 10 opened by removing the cap 25 of the plastic bottle 2 from the plastic bottle body 20. Fig. 7 is a graph showing the correlation between the capacitance of the electrodes 4A of the tagged container 10A and the water level WA.

First, as shown in Fig. 7, when the tagged container 10A shown in Fig. 5 is closed, the IC chip 5 communicates with an external device and measures the capacitance stored between the first and second electrodes 41A and 42A. The total capacitance measured at this time is referred to as a capacitance Q1.

In the tagged container 10A of the second embodiment, compared to the first embodiment, the space S1 between the first and second electrodes 41A and 42A extends with a substantially uniform gap between them, but has the first electrode part 412 and the second electrode parts 413 that differ in size. As a result, the capacitance has a zigzag correlation with the water level WA of the water W as shown in Fig. 7. The IC chip 5 can record the correlation between the measured capacitance and the water level WA of the water W, such as the one shown in Fig. 7, to detect the water level WA.

In order to take out the water W, the user removes the cap 25 of the plastic bottle 2 from the closed tagged container 10A shown in Fig. 5 to reach the tagged container 10A shown in Fig. 6. Then, the linking part 414 and the substrate 3A are torn off, and the second electrode part 413 and the second electrode part 423 provided on the cap 25 are electrically disconnected.

After the tagged container 10A has been opened as shown in Fig. 6, the IC chip 5 communicates with an external device and measures the capacitance stored between the first and second electrodes 41A and 42A. The total capacitance will be a capacitance Q2 that is slightly smaller than the capacitance Q1. That is, because the second electrode part 413 and the second electrode part 423 provided on the cap 25 are electrically disconnected, the capacitance of the electrodes 4A changes even if the water level WA of the water W remains the same.

In this embodiment, the IC chip 5 stores information on the capacitance in the closed state so that it is possible to detect that the tagged container 10A in the closed state has been opened.

After that, when the user removes water W and the water level gradually decreases from P6 to P1 as shown in Fig. 6, the capacitance also decreases. In this embodiment, the tagged container 10A has the first electrode part 412 and the second electrode parts 413 that differ in size. Therefore, the change in capacitance changes significantly with the water level WA, improving the measurement accuracy of the IC chip 5 and enabling the water level WA to be detected in stages such as the water levels P1 to P6.

The second embodiment of the present invention has been specifically described referring to the drawings. However, specific configurations of the present invention should not be limited to this embodiment but the present invention should include design changes and the like within the scope not departing from the spirit of the present invention. Further, the components described in the above embodiments and the modifications described below can be appropriately combined with each other.

### (Third Embodiment)

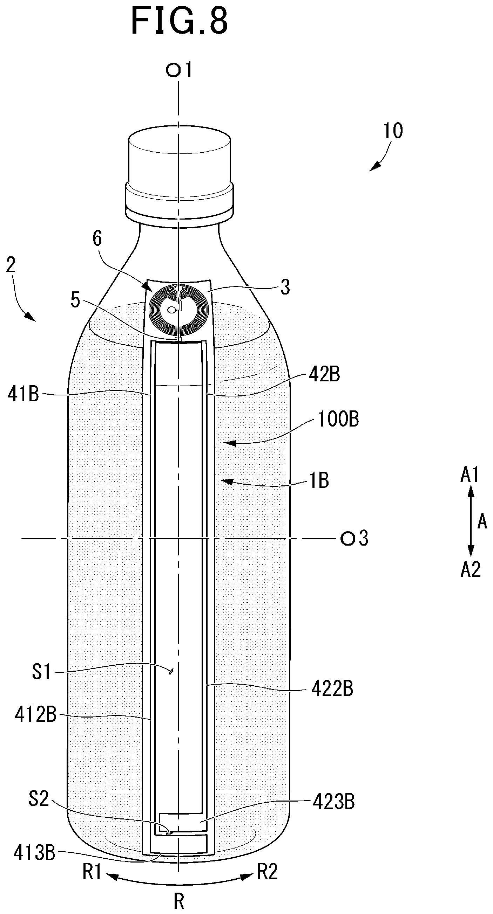

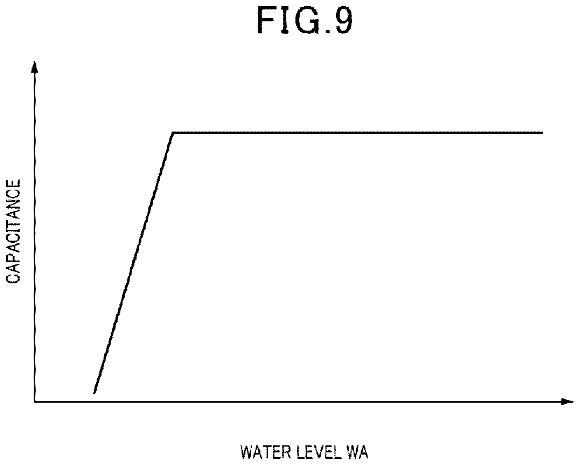

Next, a third embodiment of the present invention will be described with reference to Figs. 8 and 9. In the following description, components that are common to those described above are denoted by the same reference signs, and duplicated description thereof will be omitted. The following embodiments all have electrodes that are different from those of the first embodiment. Therefore, the following description will focus on the differences from the first embodiment.

Fig. 8 is a diagram showing the configuration of a capacitance detection tag 1B of a tagged container 10B according to the third embodiment of the present invention.

As shown in Fig. 8, electrodes 4B are provided on the surface 3f of the substrate 3, and includes a first electrode 41B and a second electrode 42B.

The first electrode 41B is provided on the front surface 3f of the substrate 3 and extends along the vertical direction A. The first electrode 41B is provided on one side R1 in the circumferential direction R of the central axis O1 of the substrate 3. The first electrode 41B includes a first electrode part 412B, a second electrode part 413B, and the first electrode connection part 411.

The first electrode part 412B has a rectangular shape extending in the vertical direction A.

In this embodiment, one second electrode part 413B is provided on a lower side A2 of a central axis O3 that passes through the center of the substrate 3 in the vertical direction A and is perpendicular to the vertical direction A. Specifically, the second electrode part 413B is located near the bottom surface of the plastic bottle 2.

Similarly to the first electrode 41B, the second electrode 42B is provided on the front surface 3f of the substrate 3 and extends along the vertical direction A. The second electrode 42B is provided on the other side R2 in the circumferential direction R of the central axis O1 of the substrate 3. Similarly to the first electrode 41B, the second electrode 42B includes a first electrode part 422B and a second electrode part 423B.

The first and second electrodes 41B and 42B face each other in the circumferential direction R with the central axis O1 in between. A space S1 is formed between the first and second electrodes 41 and 42 that extends in the vertical direction A with a substantially uniform gap between them. Further, a small gap S2 is formed between the first electrode part 412B of the first electrode 41B and the first electrode part 422B of the second electrode 42B.

### (Effects)

The effects of the tagged container 10B will now be described.

Fig. 9 is a graph showing the correlation between the capacitance of the electrodes 4B of the tagged container 10B and the water level WA.

In the tagged container 10B of the third embodiment, compared to the first embodiment, the first electrode part 412B is formed in an elongated rectangular shape along the vertical direction A, and therefore the capacitance hardly changes with the water level WA of the water W, as shown in Fig. 9. The second electrode part 413B is located near the bottom surface of the plastic bottle 2. Therefore, the capacitance changes more significantly with the water level WA of the water W when it is near the bottom surface than when the water level WA is in the area covered by the first electrode part 412B. Therefore, the IC chip 5 can record the correlation between the measured capacitance and the water level WA of the water W, such as the one shown in Fig. 9, to detect the water level WA.

In this manner, in this embodiment, the IC chip 5 can detect the water level with high accuracy regardless of the position by detecting the capacitance that changes greatly.

Th third embodiment of the present invention has been specifically described referring to the drawings. However, specific configurations of the present invention should not be limited to this embodiment but the present invention should include design changes and the like within the scope not departing from the spirit of the present invention. Further, the components described in the above embodiments and the modifications described below can be appropriately combined with each other.

### (Modifications)

The first and second electrodes 41 and 42 of the capacitance detection tag 1 according to the above embodiments may be attached to the substrate 3 with their orientations in the circumferential direction R reversed.

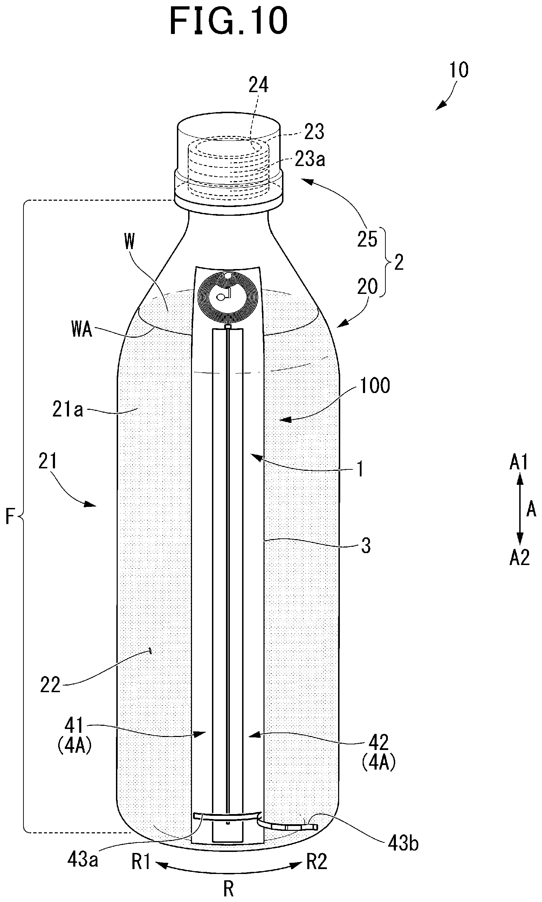

In addition, as shown in Fig. 10, in the capacitance detection tag 1 according to the above-described embodiments, the electrodes 4A may be formed in a loop shape in which the first and second electrodes 41 and 42 are electrically connected.

The tagged sticker 100 of the tagged container 10 has a tear-open part 43b near the lower end of the electrodes 4A. The tear-open part 43b is surrounded by perforations 43a. The electrodes 4A are separated into the first and second electrodes 41 and 42 when the tear-open part 43b is torn off. That is, the first and second electrodes 41 and 42 are electrically disconnected from each other.

The capacitance between the electrodes 4 of the first embodiment may vary in the initial state. If the capacitance varies, it is difficult to determine that it is in the initial state. If the electrodes 4A are loop-shaped as in this modification, the capacitance in the initial state has a fixed value, making it easier to determine that the electrodes 4A are in the initial state.

In addition, when the IC chip 5 and the antenna part 6 are provided on the lower end side of the plastic bottle 2 as in the second embodiment, the first and second electrodes 41A and 42A may be electrically connected on the cap 25 of the plastic bottle 2 and formed in a loop shape. In this configuration, instead of the perforations 43 described above, the electrodes 4A are separated into the first and second electrodes 41A and 42A when the cap 25 is removed from the plastic bottle body 20.

In addition, in this embodiment, the actions and effects in the case where the water level WA decreases are described as an example. However, the present invention is not particularly limited to this, and it is also effective when the user adds water W to the plastic bottle 2 and the water level rises.

The second electrode part 413 and the second electrode part 423 according to the second embodiment do not necessarily have to be provided on the cap 25. For example, it suffices if at least one of the second electrode part 413 and the second electrode part 423 is provided at a position closest to the cap 25 in the detectable area F. In addition, the substrate 3A may be provided with perforations or the like so that the second electrode part 413 and the second electrode part 423 can be easily separated and electrically disconnected when the user removes the cap 25 of the plastic bottle 2.

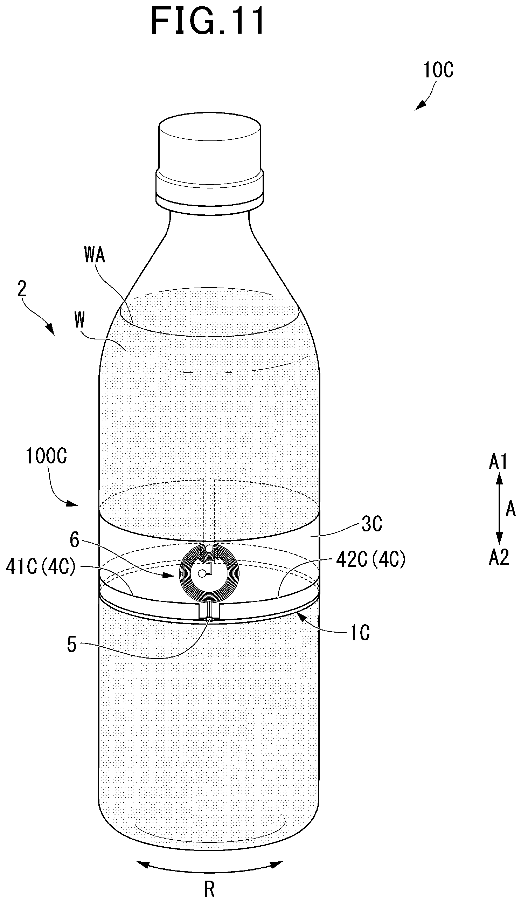

The size and shape of the first and second electrodes according to the above embodiments are not particularly limited. The positions of the first and second electrodes are also not particularly limited. For example, as shown in Fig. 11, a tagged sticker 100C for a tagged container 10C has a first electrode 41C and a second electrode 42C of electrodes 4C of a capacitance detection tag 1C provided on a substrate 3C that is wrapped around the plastic bottle 2 in the circumferential direction. The first and second electrodes 41C and 42C are formed in the circumferential direction R so as to pass through the center of the plastic bottle 2 in the vertical direction A. In this case, the IC chip 5 can suitably measure the water level WA when it reaches near the half of the plastic bottle 2 or lower. This allows the user to easily know when to refill the containing part 22 of the plastic bottle 2 with water W.

### (Fourth Embodiment)

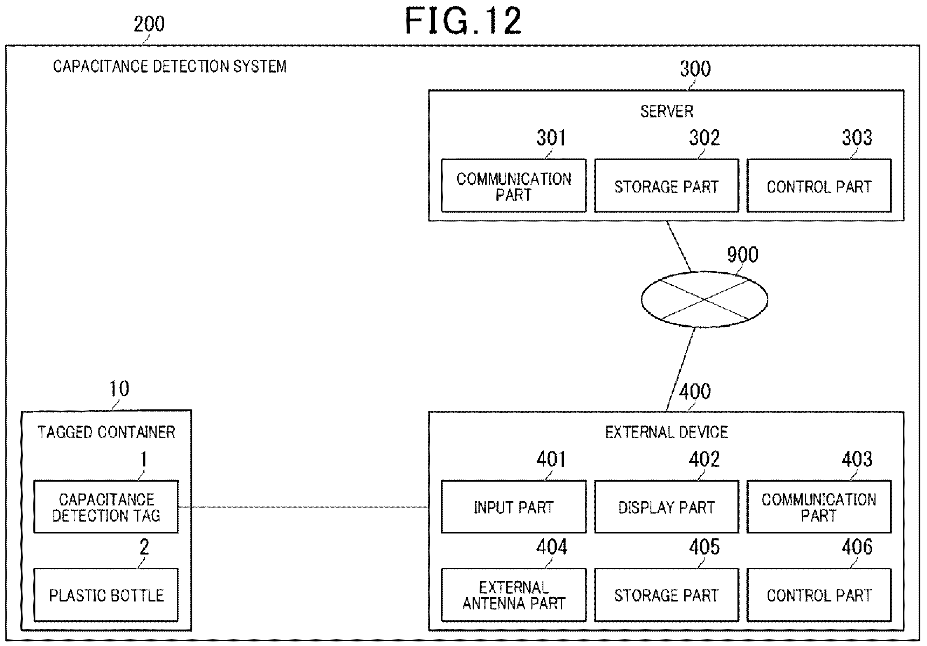

Next, a fourth embodiment of the present invention will be described with reference to Fig. 12. In the following description, components that are common to those described above are denoted by the same reference signs, and duplicated description thereof will be omitted. The following embodiments are all different from the first embodiment in that each is configured as a capacitance detection system using a server and an external device. Therefore, the following description will focus on the differences from the first embodiment.

### [Capacitance Detection System 200]

Fig. 12 is a diagram showing the configuration of a capacitance detection system 200 according to the fourth embodiment.

The capacitance detection system 200 according to the fourth embodiment includes the tagged container 10 according to the first embodiment, a server 300, and a contactless external device 400.

### [Tagged Container 10]

The tagged container according to the first embodiment is used as the tagged container 10. The tagged container 10 includes the capacitance detection tag 1. The IC chip 5 of the capacitance detection tag 1 can communicate with the external device 400 via the antenna part 6.

### [Server 300]

The server 300 is an information processing device capable of communication. The server 300 operates in response to a request sent from the external device 400. The server 300 includes a communication part 301, a storage part 302, and a control part 303.

The communication part 301 is a communication interface. The communication part 301 communicates with the external device 400 via a network 900. The communication part 301 may be, for example, a device that communicates with a router connected to the Internet using a predetermined protocol such as a wired LAN.
The communication part 301 may be, for example, a device that communicates with an access point connected to the Internet using a predetermined protocol such as a wireless LAN.

The storage part 302 is configured using a storage device such as a magnetic hard disk device or a semiconductor storage device. The storage part 302 stores program data for applications that run on the server 300. The storage part 302 may store data to be transmitted to and from other external devices via the communication part 301.

The control part 303 is configured using a processor such as a CPU. The processor executes a program stored in the storage part 302 to allow the control part 303 to function.

### [External Device 400]

The external device 400 is, for example, a communication terminal device that can be carried by the user. The external device 400 is, for example, a mobile phone such as a smartphone, a tablet terminal, a portable personal computer, a wearable terminal, or the like. The external device 400 is a contactless device that can communicate with the tagged container 10. The external device 400 includes an input part 401, a display part 402, a communication part 403, an external antenna part 404, a storage part 405, and a control part 406.

The input part 401 is configured using an existing input device such as a keyboard, a pointing device (mouse, tablet, or the like), a button, or a touch panel. The input part is operated by a user when inputting user instructions into the mobile terminal device. The input part may be an interface for connecting the input device to the external device 400.

The display part 402 is an image display device such as a cathode ray tube (CRT) display, a liquid crystal display, or an organic electro luminescence (EL) display. The display part 402 displays data information. The display part 402 may be an interface for connecting the image display device to the external device 400.

The communication part 403 is a communication interface. The communication part 403 communicates with the server 300 via the network 900. The communication part 403 may be, for example, a device that performs wireless communication using a predetermined protocol with a base station provided in a mobile communication network. The communication part 403 may be, for example, a device that communicates with an access point connected to the Internet using a predetermined protocol such as a wireless local area network (LAN).

The external antenna part 404 is a communication interface. The external antenna part 404 wirelessly communicates with the antenna part 6 provided on the capacitance detection tag 1 of the tagged container 10 by, for example, near field communication (NFC).

The storage part 405 is configured using a storage device such as a magnetic hard disk device or a semiconductor storage device. The storage part 405 stores, for example, program data for applications that run on the external device 400. The storage device 405 may further store other information.

The control part 406 is configured using a processor such as a central processing unit (CPU). The processor executes a program stored in the storage part 405 to realize the functions of the control part 406.

Next, operation of the capacitance detection system 200 will be described.

The capacitive detection system 200 according to this embodiment operates in both an offline state and an online state. Here, offline refers to a state in which the external device 400 is not communicating with the server 300 via the network 900. Online refers to a state in which the external device 400 can communicate with the server 300 via the network 900.

The user installs a predetermined application on the external device 400 in advance by operating the external device 400 the user is carrying. Information on the correlation between the capacitance and the water level WA of the water W for particular identification information, detailed information on the plastic bottle 2, and other information may be registered on the application in advance by user operation.

### [Offline State]

First, operation of the capacitance detection system 200 in the offline state will be described.

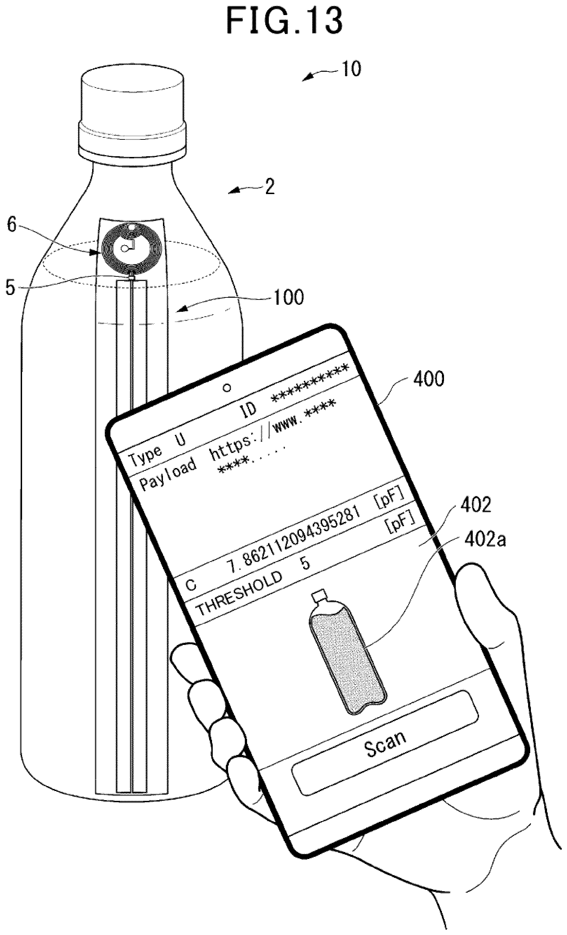

As shown in Fig. 13, the user holds the external device 400 and brings the external antenna part 404 (external device 400) near the antenna part 6 of the capacitance detection tag 1. Then, the IC chip 5 of the capacitance detection tag 1 can be supplied with power via the antenna part 6, measure the capacitance between the first and second electrodes 41 and 42, and transmit information to the external device 400. The IC chip 5 can also transmit identification information on the plastic bottle 2 to the external device 400.
The external device 400 stores the acquired information on the storage part 405.

When the IC chip 5 of the capacitance detection tag 1 stores the information on the correlation between the measured capacitance and the water level WA of the water W, the remaining amount of water W in the plastic bottle 2 can be detected, and the detection information can be transmitted to the external device 400. When the external device 400 stores information on the correlation between the capacitance and the water level WA of the water W on an application, the IC chip 5 transmits the measured capacitance value to the external device 400. The external device 400 can determine the remaining amount of the water W in the plastic bottle 2 from the measured value, and generate detection information.

The user can check the detection information via the application. Specifically, based on the capacitance measured by the IC chip 5, the control part 406 can determine whether the water W in the containing part 22 is full, half of the water W is remaining, or a there is not much water W left. Therefore, the user can easily begin the next action, such as refilling the water W or preparing the next plastic bottle 2.

A specific display example displayed on the external device 400 will be described.

In this embodiment, as shown in Fig. 13, when the external device 400 is brought close to the antenna part 6 of the capacitance detection tag 1, the identification information of the plastic bottle 2 is displayed, for example, on an application that provides the remaining amount of water W in the container 10. The display part 402 of the external device 400 displays the type, ID, URL for the product information, remaining amount in the container 10, threshold, an illustration 402a of the plastic bottle, and the like.

It suffices if the display part 402 displays at least the illustration 402a of the plastic bottle that allows the user to visually confirm the remaining amount.

When the remaining amount of water W in the container 10 is equal to or greater than a threshold, as shown in Fig. 13, the illustration 402a of the plastic bottle is displayed as an illustration showing a state in which the container 10 is filled with water.

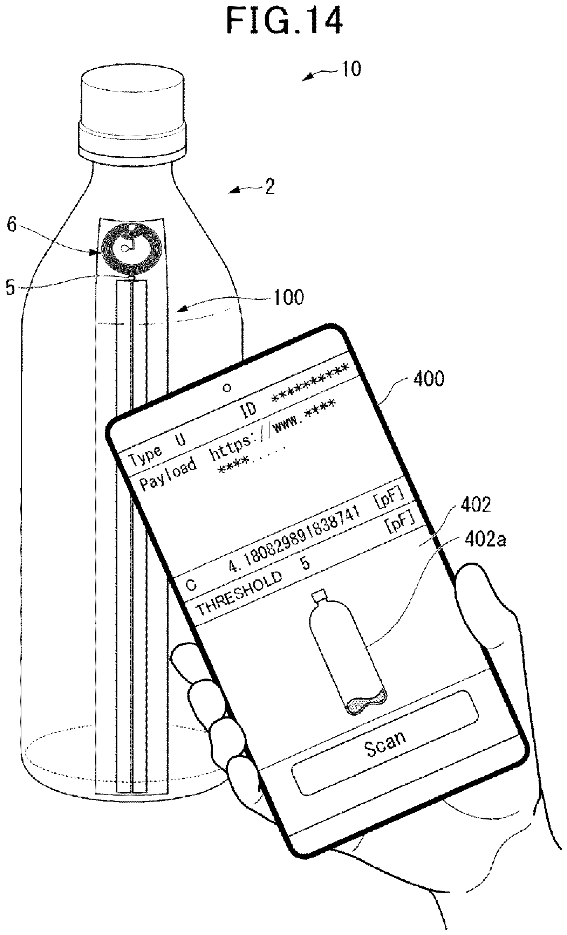

When the remaining amount of water W in the container 10 is equal to or smaller than the threshold, as shown in Fig. 14, the illustration 402a of the plastic bottle is displayed in a state where there is not much water left. In this way, the user can instantly check the remaining amount by visually checking the illustration 402a.

For example, if the container is translucent or opaque, it is difficult to know the remaining amount of water W in the container 10. In such a case, the user can check the remaining amount by bringing the external terminal 400 close to the container 10 and visually checking the illustration 402a displayed on the display part 402. This makes it easy to check the remaining amount in the container 10 even if the container is translucent or opaque.

Note that when the user holds the external terminal 400 over the container 10, if the product is unused, information regarding how to use the product, how to store it, and other information on how to handle it, as well as a website providing product information may be displayed on the display part 402.

Further, when the user holds the external terminal 400 over the container 10, if the product has already been used, a site introducing the next product and offering service coupons may be displayed.

Note that when the user holds the external terminal 400 over the container 10, the site may be automatically displayed on the display part 402, or may be displayed when the user accesses the URL.

It is also possible that the IC chip 5 transmits identification information for the plastic bottle 2 to the external device 400, and the control part 406 of the external device 400 cause the display part 402 to display the remaining amount in the tagged container 10 in the identification information. The user can easily start the next action by checking the display part 402. The user can also check specific information on the plastic bottle 2.

Note that the external device 400 can transmit information input by the user via the input part 401 to the IC chip 5. This allows the IC chip 5 to add and record the acquired information or update information. For example, the user can add information to the identification information and transmit it to the IC chip 5. The user can also cause the external device 400 to communicate with the capacitance detection tag 1 periodically to cause the IC chip 5 to record the time and place of communication, as well as the state at that time, in association with each other. This allows the tagged container 10 to enable the user, via the external device 400, to narrow down and estimate to a certain extent the timing for refilling the water W and the action to prepare the next plastic bottle 2, and the like.

### [Online State]

Next, operation of the capacitance detection system 200 in the online state will be described.

The user holds the external device 400 and brings the external antenna part 404 near the antenna part 6 of the capacitance detection tag 1. Then, the IC chip 5 of the capacitance detection tag 1 can be supplied with power via the antenna part 6, measure the capacitance between the first and second electrodes 41 and 42, and transmit the capacitance measurement value information or detection information to the external device 400. The IC chip 5 can also transmit identification information on the plastic bottle 2 to the external device 400.

The communication part 403 of the online external device 400 manually or automatically transmits the received information to the server 300 via the network 900.

When the control part 303 of the server 300 receives the capacitance measurement value information or detection information and the identification information via the communication part 301, the control part 303 associates these pieces of information with other information and stores them in the storage part 302. Specifically, the control part 303 of the server 300 can detect the water level WA of the water W in the plastic bottle 2 using the measurement value information and generate the detection information. The control part 303 of the server 300 can also, for example, based on the received identification information, generate capacitance detection information by compiling detailed information (for example, place of production) about the contents (water) in the plastic bottle 2 indicated by that identification information, the time it was received (information indicating the time), the place it was received (information indicating the location), and information on other plastic bottles related to the identification information. The control part 303 can transmit the detection information or capacitance detection information to the external device 400. Note that the capacitance detection information may include the detection information.

A user can use the external device 400 to access the server 300 from an application via the network 900 to obtain detection information or capacitance detection information. The detection information or the capacitance detection information may be automatically sent to the external device 400 by email if an email address is registered in advance in the application. The detection information or the capacitance detection information may be automatically transmitted using push notification for an application of the external device 400. The user can check the detection information or capacitance detection information via the display part 402.

In this way, the capacitance detection system 200 according to this embodiment allows the user to easily check the remaining amount of water W by using the external device 400, whether online or offline. In addition, the capacitance detection system 200 according to this embodiment allows the user to obtain new information so that the user can be easily led to the next action or sales promotion.

The fourth embodiment of the present invention has been specifically described referring to the drawings. However, specific configurations of the present invention should not be limited to this embodiment but the present invention should include design changes and the like within the scope not departing from the spirit of the present invention. Further, the components described in the above embodiments and the modifications described below can be appropriately combined with each other.

### (Modifications)

For example, in the above embodiments, a plastic bottle is given as an example of a container used as the tagged container, but the present invention is not particularly limited thereto. The container may be a bottle, a tube, a pouch, a box, a glass box, a paper carton, or the like. The cross-sectional shape of the container or the opening is not particularly limited, and may be a circle, a triangle, a rectangle, or any other shape. The size of the container is also not particularly limited. The sealing part is not limited to a cap, but may be any member that seals the opening.

Although water, which is a liquid, is given as an example of the contents in the plastic bottle in the above embodiment, the contents do not have to be liquid. For example, it may be a solid such as yogurt or jelly.

The capacitance detection tag according to the above embodiments does not need to communicate in the UHF band, and any frequency band that supports wireless communication such as the HF band, microwave band (around 2.45 GHz), or LF band (135 kHz or less) can be used.

In addition, the capacitance detection tag according to the above embodiments may further be provided with one or more additional component such as a protective mold, various resistors, a capacitor, a rectifier, a surge protector, a power source, a power generating element, a display part, a modularized electronic circuit, and the like.

The electrodes of the capacitance detection tag according to the above embodiments include two electrodes, a first electrode and a second electrode, but this is not particularly limited, and three or more electrodes may be included.

In any of the above embodiments, the capacitance detection tag and tagged container of the present invention can provide a capacitance detection tag that can be easily attached to a container and can detect the capacitance of the contents in the container, and a tagged container provided with the capacitance detection tag.

### [Industrial Applicability]

The capacitance detection tag and tagged container of the present invention can be industrially applied because they can provide a capacitance detection tag that can be easily attached to a container and can detect the capacitance of the contents in the container, and a tagged container provided with the capacitance detection tag.

### [Reference Signs List]

10, 10A, 10B ... Tagged container
2 ... Plastic bottle (container)
20 ... Plastic bottle body (container body)
21 ... Main part
21a ... Outer side surface (outer surface)
22 ... Containing part
23 ... Spout part
24 ... Opening
25 ... Cap (sealing part)
100, 100A... Tagged sticker
1, 1A, 1B ... Capacitance detection tag
3, 3A... Substrate
3f, 3Af... Front surface
4, 4A, 4B ... Electrode
41, 41A, 41B ... First electrode
410 ... First water level detection part
412, 412B ... First electrode part
413, 413B ... Second electrode part
42 ... Second electrode
420 ... Second water level detection part
422, 422B ... First electrode part
423, 423B ... Second electrode part
5 ... IC chip
6 ... Antenna part
200 ... Capacitance detection system
300 ... Server
400 ... External device
900 ... Network
W ... Water (contents)
WA... Water level (height of upper surface)
F ... Detectable area

## Claims

1. A capacitance detection tag provided to a container including
a containing part that contains contents whose upper surface level changes in a height direction, the capacitance detection tag comprising:
electrodes including a first electrode and a second electrode located so as not to overlap with the first electrode;
an antenna part that enables contactless communication with an external device; and
an IC chip that is electrically connected to the electrodes and the antenna part and measures a capacitance formed between the first and second electrodes, wharein
the IC chip communicates with the external device without contact via the antenna part and transmits the capacitance measured by the IC chip to the external device.

2. The capacitance detection tag according to claim 1, wharein the first and second electrodes extend in the height direction.

3. The capacitance detection tag according to claim 1, wharein the capacitance detection tag is attached to an outer surface of the container.

4. The capacitance detection tag according to claim 1, wharein the capacitance detection tag is integrally molded with the container.

5. The capacitance detection tag according to claim 1 or 2, wharein the first and second electrodes are arranged with a substantially uniform gap extending in the height direction therebetween.

6. The capacitance detection tag according to claim 1 or 2, wharein the first and second electrodes have substantially the same size and shape.

7. The capacitance detection tag according to claim 1 or 2, wharein the first and second electrodes have different shapes.

8. The capacitance detection tag according to claim 1 or 2, wharein
the first or second electrode includes a first electrode part and a second electrode part having a larger contact area with the container than the first electrode part does with the container, and
the first and second electrode parts are alternately provided along the height direction.

9. The capacitance detection tag according to claim 8, wharein the first and second electrodes each include the second electrode part, and
the second electrode part of the first electrode and the second electrode part of the second electrode have different sizes.

10. The capacitance detection tag according to claim 8, wharein the second electrode part is provided below a center of the container in the height direction.

11. The capacitance detection tag according to claim 1 or 2, wharein the first and second electrodes are provided along a circumferential direction of the container and face each other with the containing part therebetween.

12. A tagged container comprising the capacitance detection tag according to claim 1 or 2, and
the container.

13. The tagged container according to claim 12, wharein the first and second electrodes are at least partially placed in a detectable area that faces a containing area in which the upper surface level changes, with the container therebetween.

14. The tagged container according to claim 12, wherein the container includes a container body having an opening through which the contents can be put into and taken out of the containing part, and a sealing part that is removable from the container body and opens and closes the opening,
the first or second electrode has a first electrode part and a plurality of second electrode parts each having a larger contact area with the container than the first electrode part does with the container,
the first electrode part and the second electrode parts are alternately provided along the height direction, and
at least one of the second electrode parts is provided on the sealing part.
